# EUROPÄISCHE PATENTSCHRIFT

(11) **EP 0 396 969 B1**
(45) Veröffentlichungstag und Bekanntmachung des Hinweises auf die Patenterteilung: **09.08.1995**
(21) Anmeldenummer: 90107968.1
(22) Anmeldetag: 26.04.1990
(51) Int. Cl.: B29C 45/37, B29C 45/73, B29C 45/14

(54) **Spritzwerkzeug für Kunststoff**
Injection mould for plastic material
Moule d'injection pour matière plastique

(30) Priorität: 09.05.1989 DE 3915061
(43) Veröffentlichungstag der Anmeldung: 14.11.1990
(73) Patentinhaber: Tetra Laval Holdings & Finance SA, 1009 Pully (CH)
(72) Erfinder: Reil, Wilhelm, D-6142 Bensheim 1 (DE)
(74) Vertreter: Weber, Dieter, Dr.

(56) Entgegenhaltungen:
- EP-A- 0 088 217
- AU-B- 3 226 068
- DE-A- 2 941 121
- FR-A- 2 488 185
- GB-A- 2 104 824
- GB-A- 2 177 964

## Beschreibung

Die Erfindung betrifft ein Spritzwerkzeug mit einem Formteil zum Spritzgießen von Kunststoff mit einem Träger zur Aufnahme des Formteils, welches zur Bildung des Spritzgießhohlraumes einen Oberflächenkonturaufbau aufweist und als lösbar am Träger angebrachter, den Oberflächenkonturaufbau aufweisender Einsatz ausgebildet und mit einem großen Teil seiner Oberfläche mit dem Träger in wärmeleitender Berührung angeordnet ist, wobei wenigstens ein Kühlraum für den Anschluß an Zu- und Abführleitungen eines Kühlmittels im Träger vorgesehen ist.

Ein Spritzwerkzeug mit den Merkmalen wie vorstehend beschrieben ist aus dem Dokument DE-A-2,941,121 bekannt. Dieses Werkzeug dient dem Erzeugen von Spritzgut großer Abmessungen und gegliederter Oberfläche. Mit dem bekannten Werkzeug sollen große Schmiedestücke oder Gußstücke und ihre aufwendige Bearbeitung umgangen werden, wobei Formkerne wegen schädlicher Spannungen im Spritzgut eine besondere Rolle spielen.

Versucht der Fachmann, anhand dieses Vorbildes Formteile mit entsprechendem Oberflächenkonturaufbau am Träger lösbar zu befestigen, wird er versuchen, eine hohe Oberflächenhärte des eingesetzten Formteiles dadurch zu erreichen, daß er antikorrosive und antiadhäsive Überzüge auf der Basis von Polytetrafluorethylen verwendet, um allein schon das Spritzgut leichter aus der Form herausnehmen zu können. Das aber bringt eine Verschlechterung der Wärmeleitfähigkeit, was sich letztlich am Endprodukt zeigt, ohne daß der Grund dem Durchschnittsfachmann ersichtlich wird. Werden Kühlnuten auf den Rückseiten der Formteile selbst vorgesehen, dann ergibt sich der Nachteil einer kleineren Auflage- und Berührungsoberfläche des Formteils mit dem gekühlten Träger.

Der Erfindung liegt daher die Aufgabe zugrunde, ein Spritzwerkzeug der eingangs genannten Art zu vereinfachen, seine Herstellung zu verbilligen, die Standzeit zu erhöhen und die Kühlung des Formteils zu verbessern.

Diese Aufgabe wird gemäß der Erfindung dadurch gelöst, daß das Formteil ohne Kühlraum ausgebildet ist und von einer dünnen Platte mit einer Dicke von 1-5 mm, besonders bevorzugt von 2-3 mm, gebildet wird.

Durch die Verwendung des Formteils in Form einer dünnen Platte kann die mit einem solchen Spritzwerkzeug ausgestattete Maschine eine erheblich größere Leistung haben, wobei sie z.B. mit einer Zykluszeit von weniger als zwei Sekunden arbeitet, um das Spritzgußteil aus Kunststoff fertigzustellen. Bei einer derart hohen Zykluszeit unterliegen die Formteile mit dem Oberflächenkonturaufbau einem nicht unerheblichen Verschleiß. Die Formteile müssen daher leicht austauschbar sein, weshalb sie als leicht zu entfernender Einsatz ausgestaltet sind. Dessen Kontaktfläche mit dem Träger ist so groß wie möglich. Der Formteileinsatz liegt rückseitig mit seiner gesamten Oberfläche in Kontakt mit dem Träger, wodurch ein guter Wärmeübergang von dem heißen Formteil auf den gekühlten Träger möglich ist. Das Formteil ist besonders preiswert dann, wenn es keinen Kühlraum hat und seine Anbringung daher auch nicht von Dichtungen zum Träger hin abhängig ist.

In der Praxis hat es sich bei Versuchen gezeigt, daß es ausreicht, wenn der Oberflächenkonturaufbau beispielsweise auf einer dünnen Platte vorgesehen wird, die am Träger verschraubt und hierbei sowie unter Zusammenwirken mit den hohen Betriebsdrücken aus dem Spritzgießhohlraum fest an entsprechende Flächen des Trägers angepreßt wird, so daß der Oberflächenkonturaufbau eine Kühlung erfährt, als wenn wenige Millimeter hinter seiner von Hitze beaufschlagten Oberfläche Kühlräume vorhanden wären. Das Formteil mit dem Oberflächenkonturaufbau ist tatsächlich das am meisten der Abnutzung durch den Betrieb unterworfene Bauteil und kann durch seine Ausgestaltung als über Schrauben lösbarer Einsatz leicht durch ein neues Formteil ausgetauscht werden.

Die dünne Platte trägt keine Beschichtung sondern besteht z.B. massiv aus Stahl vom Kern bis zur Oberfläche. Ein solches Formteil kann hergestellt und direkt danach in den Träger eingesetzt werden. Die Oberfläche am Oberflächenkonturaufbau besteht aus demselben Material wie der Kern des Formteils, welches daher die Wärme aus dem gespritzten Kunststofformling direkt auf den Träger abführt.

Es ist zweckmäßig, wenn das Formteil aus Stahl und der Träger aus einem Material mit größerer Wärmeleitfähigkeit als Stahl besteht, vorzugsweise einem Metall, wie z.B. Aluminium. Man kennt die gegenüber Stahl größere Wärmeleitfähigkeit des Aluminiums und hat auch ausgereifte Bearbeitungstechniken für Aluminium. Vorzugsweise kann man erfindungsgemäß den Träger sogar als Gußteil ausbilden, denn das Gießen von Aluminium ist ebenfalls eine beherrschte Technik. Der Oberflächenkonturaufbau kann durch Fräsen von der Oberfläche her gut am Formteil hergestellt werden, und da das einsatzförmige Formteil flächig in Wärmeberührung am Träger gehalten ist, ist der Oberflächenkonturaufbau nicht nur mechanisch einwandfrei abgestützt, sondern auch die hohen Temperaturen aus dem Spritzgießhohlraum können durch die in Wärmeberührung miteinander befindlichen Flächen vom Formteil einerseits und Träger andererseits gut abgeführt werden.

Zweckmäßig ist es gemäß der Erfindung ferner, wenn der Träger eine in mindestens einer Querschnittsebene winkelförmige Ausgestaltung hat. Bisher wurde ein Träger in schwächerer, dünnerer und kleinerer Gestalt hergestellt, weil er nur die Bewegungskräfte der Formteile zu übertragen hatte, denn die Zu- und Abführleitungen für Kühlwasser und die Formteile mit den Kühlräumen selbst waren vom Träger aufzunehmen, zu haltern und zu bewegen. Druckkräfte im Betrieb hingegen wurden von den Formteilen ausschließlich und über Gelenke und Hebel am Träger aufgenommen und aufden Maschinenrahmen abgeleitet. Schon von diesem Grundkonzept her hatte der Durchschnittsfachmann Bedenken, Kühlräume in einem Träger anzuordnen. Die neue Überlegung gemäß der vorliegenden Erfindung ist nun eine massivere und stabilere Ausgestaltung des Trägers, in den man unter dieser Voraussetzung dann auch Kühlräume einbringen kann, ohne hinsichtlich Stabilität und Festigkeit zu nahe an kritische Grenzen zu gelangen. Durch die in wenigstens einer Querschnittsebene vorgesehene winkelförmige Ausgestaltung kann der Träger sehr stabil hergestellt werden, so daß er dann dick genug ausgestaltet ist und ausreichend Masse hat, um für an ihm angepreßte Einsätze hervorragende Kühleigenschaften vorzugeben.

Zur Halterung ist es erfindungsgemäß besonders günstig, wenn das Formteil zwei winkelförmig zueinander angestellte Platten aufweist, deren jede einen Oberflächenkonturaufbau aufweist und die vorzugsweise zusammen einen Winkel von 90° einschließen. Bei Flüssigkeitspackungen ist es zweckmäßig, den Deckel aus Kunststoff ohne Trägermaterial herzustellen und an den schmalen Endkanten des Papiertubus anzuspritzen. Außerdem ist es vorteilhaft, wenn dieser Deckel zugleich eine Öffnungsvorrichtung aufweist, die in besonders zweckmäßiger Weise eine Aufreißlasche trägt. Es ergeben sich bei solchen Aufbauten Deckelformen, insbesondere durch die Öffnungsvorrichtung und die Aufreißlasche, die sich in verschiedene Ebenen erstrecken, z.B. die Hauptebene des Deckels in horizontaler Ebene, wenn man eine Flüssigkeitspackung auf den Tisch stellt, und die Aufreißlasche in senkrecht dazu liegender Ebene. Damit ergeben sich zwei unterschiedliche Oberflächenkonturaufbauten, der eine für die Hauptebene des Deckels und der andere für die Aufreißlasche. Daher ist es zweckmäßig, wenn zwei Platten im Winkel zueinander angeordnet werden, die jeweils einen Oberflächenkonturaufbau tragen, und mit ihrem dünnwandigen Aufbau fest am Träger verankert werden.

Zur Unterstützung der Anbringung des Formteils ist es zweckmäßig, wenn an der Platte des Formteils wenigstens eine Verankerung angebracht ist. Zum Beispiel könnte das Formteil durch Gießen oder Schmieden hergestellt werden, wobei der vom Spritzgießhohlraum abgewandte Teil der Platte des Formteils mit den genannten Verankerungen versehen wird. Auf diese Weise kann die Verankerung des Formteils am Träger zum schnelleren Austauschen bei Reparaturen von außen zugänglich sein.

Besonders günstig ist erfindungsgemäß die Verwendung des Spritzwerkzeuges der oben beschriebenen Art zum Anspritzen eines Deckels und/oder Bodens an den Papiertubus einer Flüssigkeitspackung. Versieht man nämlich die herkömmlichen Packungsherstellungsmaschinen mit einem Werkzeug der vorstehend beschriebenen Art, welches das eine oder andere Merkmal - gegebenenfalls alle Merkmale - aufweist, dann wird die Leistung der Packungsherstellungsmaschine erhöht, weil die Kühlzeit verringert werden kann, und dennoch muß nicht ein kompliziert und teuer aufgebautes Kühlsystem nach der Abnutzung des Oberflächenkonturaufbaues am Spritzgießhohlraum weggeworfen werden.

Die Erfindung ist mit den Außenformteilen eines Spritzwerkzeuges bekannter Art verglichen worden, und auch die erreichten Vorteile sind so beschrieben, daß sie besonders günstig in Verbindung mit einer zweiteiligen Außenform sind. Der Fachmann weiß aber, daß man auch die Innenform mit entsprechenden Einsätzen, Platten und Verankerungen versehen kann, während die Kühlkanäle im Trägerteil der Innenform verlaufen, so daß nach der Abnutzung des jeweiligen Oberflächenkonturaufbaues nur der Einsatz, die Platte und ihre Verankerung ausgetauscht werden müssen, während die Kühlräume sich getrennt davon und flüssigkeitsdicht separat davon im tragenden Teil der Innenform sind und nicht zusammen mit dem abgenutzten Oberflächenkonturaufbau weggeworfen werden müssen.

Weitere Vorteile, Merkmale und Anwendungsmöglichkeiten der vorliegenden Erfindung ergeben sich aus der folgenden Beschreibung eines bevorzugten Ausführungsbeispieles. Es zeigen:
- Figur 1: die Querschnittsansicht eines Teils des Spritzwerkzeuges einer bevorzugten Ausführungsform gemäß der Erfindung,
- Figur 2: eine Rückansicht auf den Träger des Spritzwerkzeuges, wobei die rückwärtige Verankerung und die Kühlwasserleitungen sichtbar sind,
- Figur 3: eine perspektivische Ansicht des Trägers mit dem den Oberflächenkonturaufbau aufweisenden Einsatz,
- Figur 4: eine Draufsicht auf den Einsatz, wenn man auf den Träger der Figur 3 von oben nach unten blickt und sich die den Einsatz abdeckenden Trägerteile wegdenkt;
- Figur 5: eine Rückansicht des Einsatzes, wenn man Figur 4 von oben nach unten betrachtet,
- Figur 6: eine Vorderansicht des Einsatzes, wenn man Figur 4 von unten nach oben betrachtet,
- Figur 7: eine Seitenansicht des Trägers, wenn man Figur 4 von links nach rechts betrachtet, und
- Figur 8: einen einseitig durch einen Deckel mit Öffnungsvorrichtung verschlossenen Tubus für eine Flüssigkeitspackung.

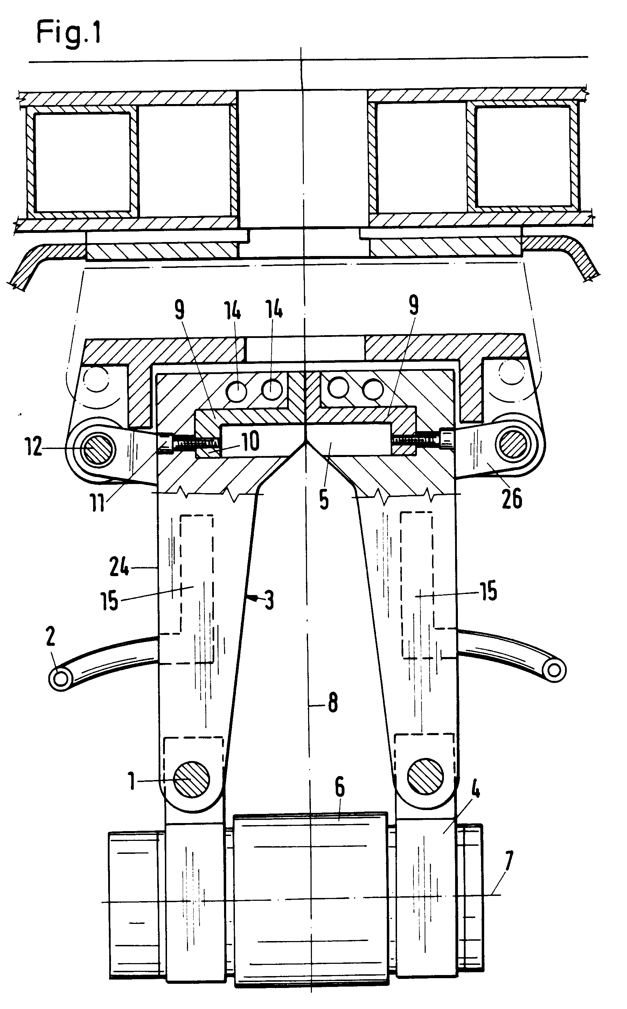

Ein Teil des Spritzwerkzeuges ist in Figur 1 dargestellt, wo um eine Achse 1 drehbar ein mit einem Kühlwasserablauf 2 versehener Träger 3 am Rahmen 4 gelagert ist. Der Träger 3 nimmt die Position ein, bei der er den halben Spritzhohlraum vorgibt. Dieser Spritzhohlraum 5 ist in Figur 1 angedeutet und wird durch das Zusammenwirken der beiden Außenformteile an den Trägern 3 und des nicht dargestellten Innenformteils gebildet. Nicht gezeigt ist der Innendorn, der an der Nabe 6 eines um die Achse 7 drehbaren, nicht gezeigten Dornrades schwenken kann, der sich also in Blickrichtung auf Figur 1 in Richtung Trennfläche 8 aus dem Raum zwischen den zwei Trägern 3 herausbewegt bzw. in diesen hineinbewegt.

Vom Träger 3 wird das Formteil 9 spielfrei gehaltert und ist mittels einer Verankerung 10 über Schrauben 11 spielfrei befestigt. Zum Einschieben und Herausnehmen des Formteils 9 müssen die Träger 3 auseinandergeschwenkt werden. Diese schwenken um die Achse 1, wenn die Laschen 26 durch einen bei 13 angreifenden Antrieb um die Achse 12 verdreht werden. Nach diesem Öffnen des Spritzhohlraumes 5 müssen dann auch die Schrauben 11 aus den Verankerungen 10 herausgeschraubt werden.

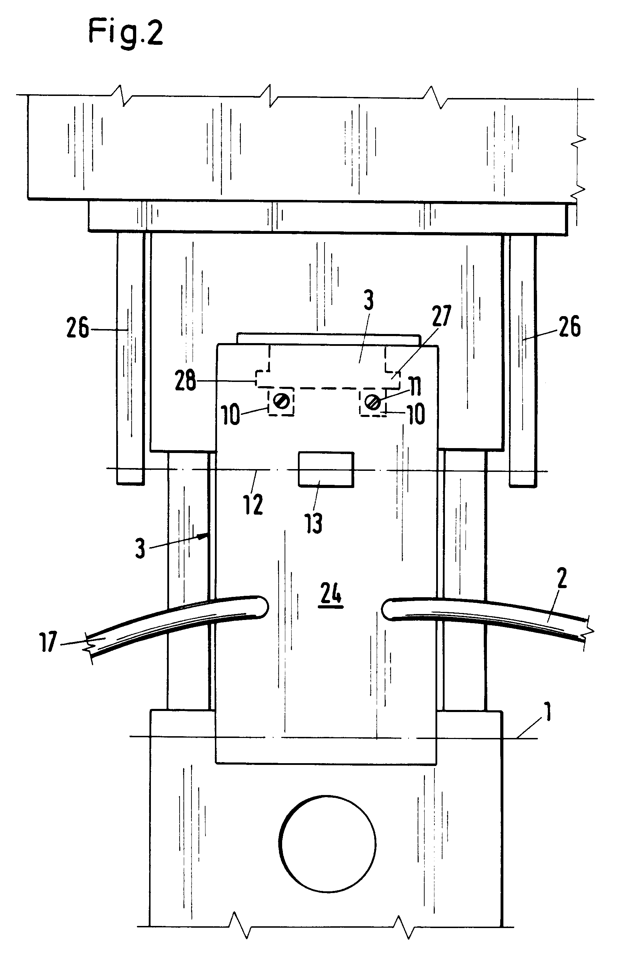

Aus Figur 1 sind auch Kühlkanäle 14 zu erkennen, deren Innenvolumen über ein nicht weiter dargestelltes Kanalsystem mit den Durchlaufkanälen 15 und letztlich mit der Kühlwasserzufuhr 17 (Figur 2) bzw. dem Kühlwasserablauf 2 verbunden sind. Aus Figur 1 sieht man, wie dicht die Kühlkanäle 14 an der Oberfläche des Formteils 9 angeordnet sind, um die im Formteil befindliche Wärme schnell abzuführen.

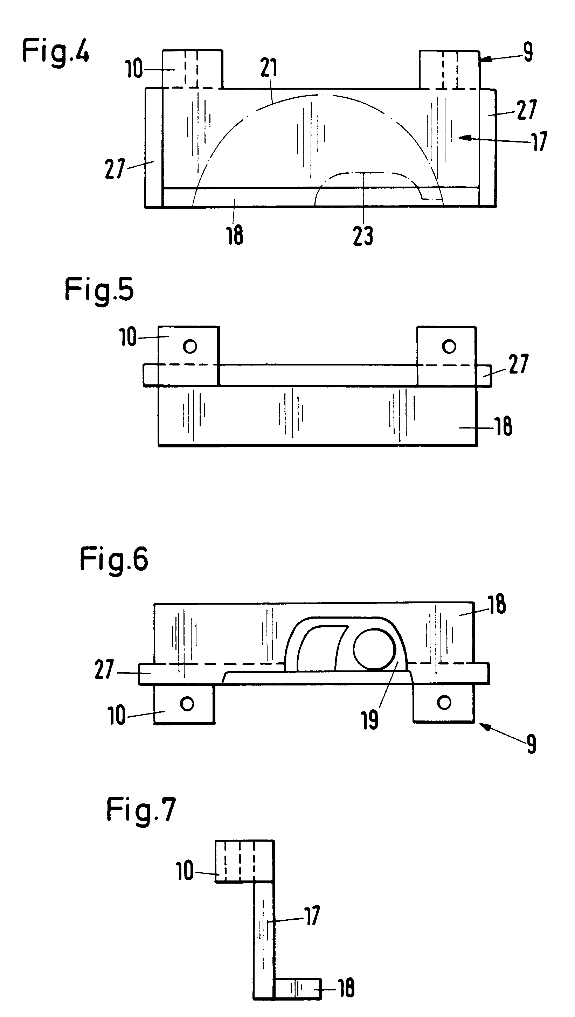

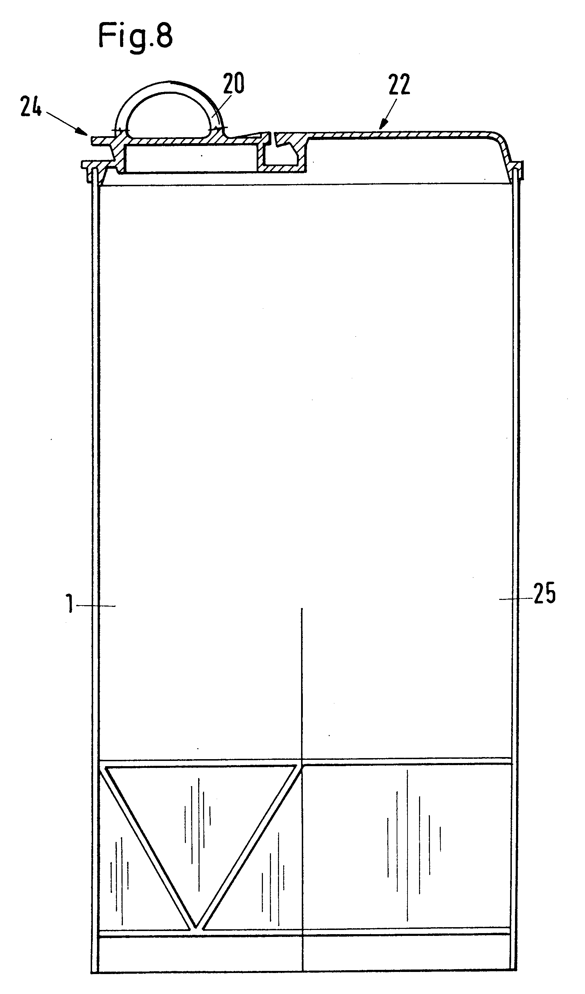

Das Formteil 9 ist in seiner Form und Ausgestaltung deutlicher aus den Figuren 4 bis 7 zu erkennen. Es besteht aus einer dünnen Hauptplatte 17, von deren Hauptebene nach einer Seite, hier "unten" genannt, die Verankerung 10 absteht, vorzugsweise am einen Ende, hier "hinten" genannt, während aus der Hauptebene dieser Platte 17 am gegenüberliegenden Ende, hier "vorn" genannt, in die zur Verankerung 10 entgegengesetzte Richtung, hier nach "oben" genannt, die Frontplatte 18 absteht und seitlich Führungen 27 angeformt sind, die in entsprechenden Führungsnuten 28 im Träger 3 gleiten können. Die Hauptplatte 17 und die Frontplatte 18 schließen einen Winkel von 90° ein. Von vorn blickt man gemäß Figur 6 auf die Frontplatte 18 und erkennt dort den Oberflächenkonturaufbau 19, insbesondere die Greiflasche 20 des in Figur 8 gezeigten Spritzlinges; man sieht beim Blick von unten auf die Hauptplatte, d.h. wenn man in Figur 7 von links nach rechts oder in Figur 6 von unten nach oben blickt, den Oberflächenkonturaufbau 21 für den Deckel 22, wie er am Tubus der Figur 8 oben zu erkennen ist. Dieser Deckel ist in Draufsicht auf die Packung rund, weshalb der Oberflächenkonturaufbau 21 für den Deckel in Figur 4 als strichpunktierte Kreislinie erscheint. Von diesem zweiten Oberflächenkonturaufbau 21 sieht man in Figur 4 außer der gestrichelten Halbkreislinie nur noch die gestrichelte Linie 23 für die Öffnungsvorrichtung 24 am Deckel 22 gemäß Figur 8. Bei einer konkreten Konstruktionszeichnung ergeben sich selbstverständlich noch weitere Kanten und Flächen, die aber hier nicht dargestellt zu werden brauchen. Für das Verständnis der Erfindung genügt es, wenn man weiß, daß der Oberflächenkonturaufbau 19 beim Blick von vorn auf die Frontplatte 18, d.h. bei Figur 6 auf die Papierebene und bei Figur 7 von unten nach oben; und der andere Oberflächenkonturaufbau für den Deckel unter der Hauptplatte 17 liegt, d.h. wenn man in Figur 4 aus einer Blickrichtung auf die Papierebene von unten nach oben und gemäß Figur 7 von links nach rechts blickt.

Das Formteil ist bei der hier gewählten, bevorzugten Ausführungsform aus Stahl aufgebaut, während der Träger 3 aus Aluminium hergestellt ist, so daß die Wärmeleitfähigkeit im Träger gegenüber der des Formteils 9 noch größer ist.

Schon aus der vorstehenden Beschreibung des Formteils 9, welches gemäß Figur 7 im Querschnitt Z-Form hat, erkennt man seinen Einsatz-Charakter. Das Formteil 9 mit seinen Oberflächenaufbauten 19 und 21 ist das eigentliche Verschleißteil, welches nach einer gewissen Standzeit ausgewechselt wird. Das Formteil 9 weist keinerlei Kühlräume auf und hat daher eine verhältnismäßig einfache Gestalt und ist preiswert herzustellen, jedenfalls billiger als eine Form, die außer einem Oberflächenkonturaufbau auch noch Kühlräume und entsprechende Dichtanschlüsse hat.

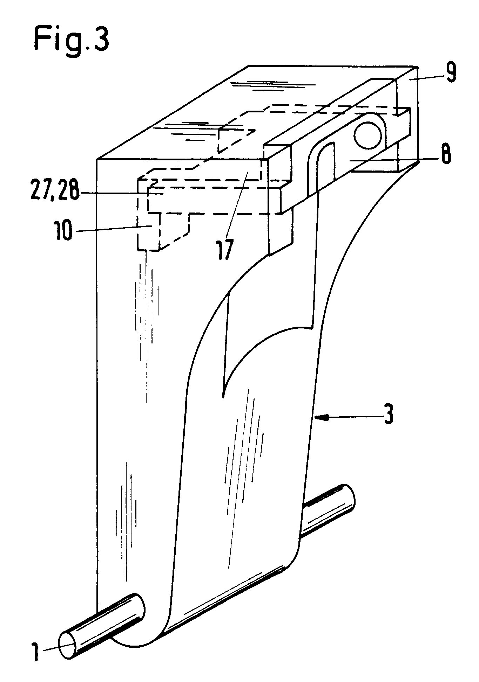

In Figur 3 ist die perspektivische Einbaulage des Formteils 9 mit der Hauptplatte 17 und der Frontplatte 18 zu erkennen. Blickt man in Figur 3 von links hinten nach rechts vorn, d.h. auf die Rückseite 24 des Trägers 3, dann hat man die Ansicht der Figur 2 mit der Verankerung 10 und den Schrauben 11.

Sieht man das fertige Produkt der Figur 8, dann erkennt man die nützliche Möglichkeit des vorstehend beschriebenen Werkzeuges mit Träger 3 und Formplatte 9 zum Anspritzen des oben in Figur 8 gezeigten Deckels 22 oder eines nicht dargestellten Bodens an den Papiertubus 25, der im oberen Bereich einen runden Querschnitt hat und im unteren Bereich durch Faltlaschen in an sich bekannter Weise mit viereckigem Querschnitt (nach dem Füllen) verschlossen wird.

Im Betrieb ergibt sich für die Kühlung des Formteils 9 der Vorteil, daß durch den Anpreßdruck des beim Spritzvorgang in den Spritzgießhohlraum 5 eingebrachten Kunststoffes die Platten 17 und 18 sich fest und innig gegen die entsprechenden Gegenflächen am Träger legen, hinter denen in dichtem Abstand die Kühlkanäle 14 verlaufen. Dadurch ist ein guter Wärmeübergang von dem Stahlformteil 9 zum Träger 3 bzw. den Kühlkanälen 14 gewährleistet.

## Patentansprüche

1. Spritzwerkzeug mit einem Formteil (9) zum Spritzgießen von Kunststoff mit einem Träger (3) zur Aufnahme des Formteils (9), welches zur Bildung des Spritzgießhohlraumes (5) einen Oberflächenkonturaufbau (19, 21) aufweist und als lösbar (10, 11) am Träger (3) angebrachter, den Oberflächenkonturaufbau (19, 21) aufweisender Einsatz ausgebildet und mit einem großen Teil seiner Oberfläche mit dem Träger (3) in wärmeleitender Berührung angeordnet ist, wobei wenigstens ein Kühlraum (14, 15) für den Anschluß an Zu- (17) und Abführleitungen (2) eines Kühlmittels im Träger (3) vorgesehen ist, dadurch gekennzeichnet, daß das Formteil (9) von einer dünnen Platte (17, 18) mit einer Dicke von 1-5 mm, besonders bevorzugt von 2-3 mm, gebildet wird.

2. Spritzwerkzeug nach Anspruch 1, dadurch gekennzeichnet, daß das Formteil (9) aus Stahl und der Träger (3) aus einem Material mit größerer Wärmeleitfähigkeit als Stahl besteht, vorzugsweise einem Metall, wie z.B. Aluminium.

3. Spritzwerkzeug nach Anspruch 1 oder 2, dadurch gekennzeichnet, daß der Träger (3) eine in mindestens einer Querschnittsebene winkelförmige Ausgestaltung hat.

4. Spritzwerkzeug nach einem der Ansprüche 1 bis 3, dadurch gekennzeichnet, daß das Formteil (9) zwei winkelförmig zueinander angestellte Platten (17, 18) aufweist, deren jede (17, 18) einen Oberflächenkonturaufbau (19, 21) aufweist und die vorzugsweise zusammen einen Winkel von etwa 90° einschließen.

5. Spritzwerkzeug nach einem der Ansprüche 1 bis 4, dadurch gekennzeichnet, daß an der Platte (17) des Formteils (9) wenigstens eine Verankerung (10) angebracht ist.

6. Verwendung des Spritzwerkzeuges nach einem der Ansprüche 1 bis 5 zum Anspritzen eines Deckels (22) und/oder Bodens an den Papiertubus (25) einer Flüssigkeitspackung.

## Claims

1. An injection moulding tool with a mould part (9) for injections moulding synthetic plastics and with a carrier (3) for holding the mould part (9), which, in order to form the injection moulding cavity (5) has a surface contour attachment (19, 21), and is in the form of an insert which is removably (10, 11) arranged on the carrier (3) and includes the surface contour attachment (19, 21), and a large part of the surface of which mould part is arranged in heat conductive contact with the carrier (3), wherein at least one cooling space (14, 15) is provided for connection to coolant supply lines (17) and coolant discharge lines (2) in the carrier (3), characterised in that the mould part (9) is formed by a thin plate (17, 18) of 1-5 mm in thickness, preferably of 2-3 mm in thickness.

2. An injection moulding tool according to Claim 1, characterised in that the mould part (9) is made of steel and the carrier (3) is made of a material of greater heat conductivity than steel, preferably a metal, e.g. aluminium.

3. An injection moulding tool according to Claim 1 or Claim 2, characterised in that the carrier (3) is angularly shaped in at least one cross-sectional plane.

4. An injection moulding tool according to Claims 1 to 3, characterised in that the mould part (9) has two plates (17, 18) set at an angle to each other, each of which plates (17, 18) has a surface contour attachment (19, 21) and preferably together enclose an angle of about 90°.

5. An injection moulding tool according to one of Claims 1 to 4, characterised in that at least one anchoring point (10) is arranged on the plate (17) of the mould part (9).

6. Use of the injection moulding tool according to one of Claims 1 to 5 for injection moulding a top (22) and/or bottom to the paper tube (25) of a pack for liquids.

## Revendications

1. Moule à injection comportant une partie de moule (9) destinée à mouler par injection une matière plastique, comportant un support (3) destiné à recevoir la partie de moule (9), qui comporte, pour former la cavité (5) du moule à injection, un système de réalisation d'un profil superficiel (19, 21) ; qui est conçu comme un insert, rapporté d'une manière amovible (10, 11) au support (3) et comportant le système de réalisation d'un profil superficiel (19, 21) ; et qui est disposé, parune grande partie de sa surface, en contact conducteur de la chaleur avec le support (3) ; où au moins une chambre de refroidissement (14, 15) est prévue dans le support (3) pour le raccordement à des conduites d'amenée (17) et d'évacuation (2) d'un fluide frigorifique ; caractérisé en ce que la partie de moule (9) est formée d'une plaque mince (17, 18) ayant une épaisseur de 1 à 5 mm et d'une manière particulièrement préférée de 2 à 3 mm.

2. Moule à injection selon la revendication 1, caractérisé en ce que la partie de moule (9) est constituée d'acier et le support (3) est constitué d'un matériau ayant une conductivité thermique supérieure à celle de l'acier, de préférence un métal, tel par exemple que l'aluminium.

3. Moule à injection selon la revendication 1 ou 2, caractérisé en ce que le support (3) a une configuration angulaire au moins dans un plan transversal.

4. Moule à injection selon l'une des revendications 1 à 3, caractérisé en ce que la partie de moule (9) comporte deux plaques (17, 18) faisant un angle l'une par rapport à l'autre, plaques dont chacune (17, 18) comporte un système de réalisation d'un profil superficiel (19, 21), et qui de préférence font un angle d'environ 90°.

5. Moule à injection selon l'une des revendications 1 à 4, caractérisé en ce qu'au moins un ancrage est rapporté à la plaque (17) de la partie de moule (9).

6. Utilisation du moule à injection selon l'une des revendications 1 à 5 pour rapporter par injection un couvercle (22) et/ou un fond au tube en papier (25) d'un emballage pour liquides.
